# EUROPEAN PATENT SPECIFICATION

(11) **EP 2 568 559 B1**
(45) Date of publication and mention of the grant of the patent: **10.09.2014**
(21) Application number: 12176972.3
(22) Date of filing: 18.07.2012
(51) Int. Cl.: H02H 3/44, H01H 59/00

(54) **Micro electro-mechanical switch (MEMS) based over current motor protection system**
MEMS-basiertes Überstrom-Motorschutzsystem
Systéme de protection de sur-courant pour moteur basé sur un micro-commutateur électro-mécanique (MEMS)

(30) Priority: 25.07.2011 US 201113190065
(43) Date of publication of application: 13.03.2013
(73) Proprietor: General Electric Company, Schenectady, NY 12345 (US)
(72) Inventor: Keeramthode, Remesh Kumar, 500003 Secunderabad (IN); Anand, Pradeep Kumar, 560066 Bangalore (IN); Hooker, John Kenneth, Louisville, KY 40225 (US); Kumfer, Brent Charles, Plainville, CT 06062 (US)
(74) Representative: Picker, Madeline Margaret

(56) References cited:
- EP-A1- 2 337 043
- EP-A2- 1 930 922

## Description

### BACKGROUND OF THE INVENTION

The subject matter disclosed herein relates to the art of motor controls and, more particularly, to a micro electro-mechanical switch (MEMS) based over current motor protection system.

EP 2 337 043 Al discloses an apparatus including an electromechanical switch structure configured to move between an open configuration and a fully closed configuration.

Many conventional electric motors are connected to a motor starter. The motor starter not only provides a mechanism for starting and stopping motor operation but often include a device that protects the motor from an over current or short circuit condition. Short circuit current can cause damage to motor windings. In order to prevent or at least limit over current damage, many motor starters employ current sensing devices that detect current and react at a particular current amplitude. The current sensing devices will cut off current to the motor if the current rises above the particular current amplitude. However, many motors, upon start up, experience an initial in-rush or starting current that is greater than a nominal current rating for the motor. The current sensing device is designed to ignore amplitude peaks associated with starting current to allow the motor to start while at the same time providing short circuit protection. Thus, many existing motor starters monitor for current that exceeds the particular amplitude for a predetermined time period, typically measured in milliseconds.

### BRIEF DESCRIPTION OF THE INVENTION

According to one aspect of the present invention, there is provided an over current protection system that includes a current sensing member configured and disposed to output an electrical rate of change signal indicative of a rate of change of an electrical current being in excess of a predetermined value, at least one micro electro-mechanical switch (MEMS) device operatively connected to the current sensing member, and a controller electrically coupled to each of the current sensing member and the at least one MEMS device. The controller is configured and disposed to open the at least one MEMS device in response to the electrical rate of change signal.

According to another aspect of the present invention, there is provided a method of protecting an electrical load from an over current condition that includes issuing a Pulse Assist Turn On (PATO) pulse through a PATO circuit to close a micro electro-mechanical switch (MEMS) device electrically coupled to the load through an electric circuit, sensing an electrical current passing through the electric circuit toward the electrical load, monitoring for a rate of change of the electrical current in the electric circuit, determining that the rate of change of the electrical current is in excess of a predetermined value, and issuing signal to open the MEMS device electrically connected to the electric circuit upon detecting that the rate of change of the electrical current is in excess of the predetermined value to prevent electrical current from passing to the electrical load.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a block diagram illustrating an over current protection system in accordance with an example embodiment;
FIG. 2 is a schematic diagram illustrating the over current protection system of FIG. 1; and
FIG. 3 is a flow chart illustrating a method of protecting an electrical load from an over current condition in accordance with an example embodiment.

The detailed description explains embodiments of the invention, together with advantages and features, by way of example with reference to the drawings.

### DETAILED DESCRIPTION OF EMBODIMENTS OF THE INVENTION

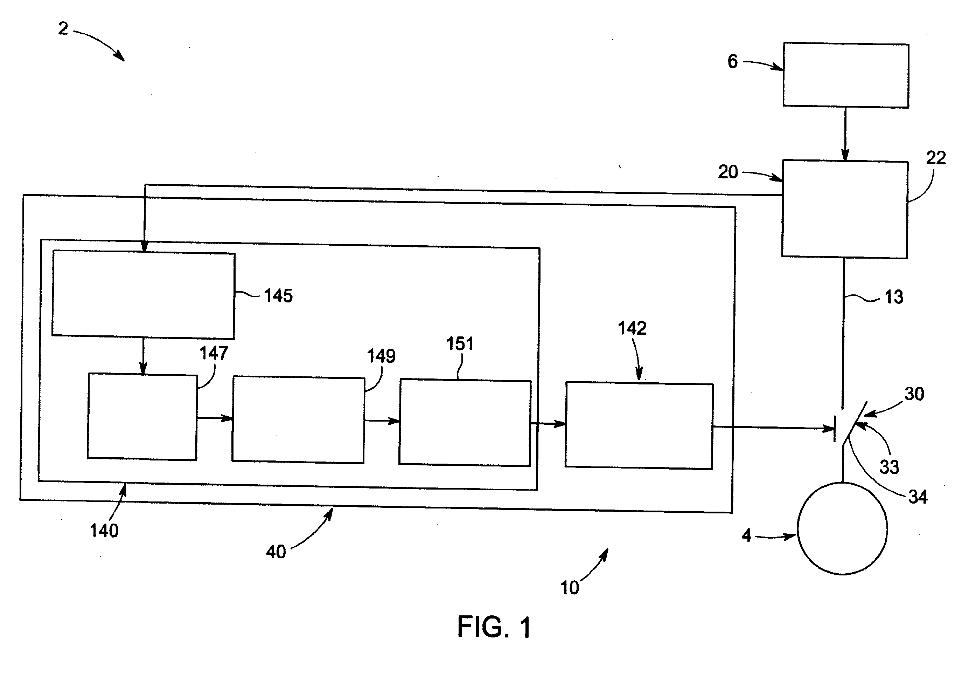

With reference to FIG. 1, a motor controller system in accordance with an example embodiment is indicated generally at 2. Motor controller system 2 includes an electric motor 4 electrically coupled to a power source 6 and an over current protection system 10 through an electric circuit 13. In the example embodiment shown, over current protection system 10 includes a current sensing member 20 that detects a rate of change (di/dt) of current passing through electric circuit 13. In accordance with one aspect of the example embodiment, current sensing member 20 takes the form of a Hall Effect Sensor 22. However, it should be understood that other devices capable of detecting a rate of change of electrical current could also be employed. As will be detailed more fully below, over current protection system 10 is also shown to include a micro electro-mechanical switch (MEMS) device 30 that takes the form of a MEMS die 33 having at least one switch 34 and a controller 40.

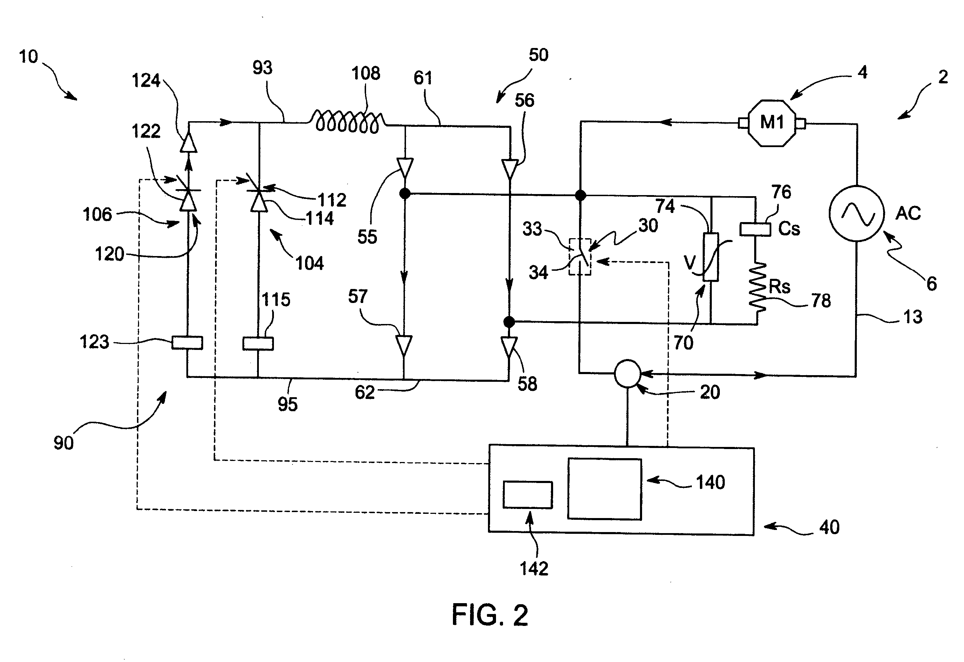

As best shown in FIG. 2, MEMS device 30 is connected across a center point (not separately labeled) of a balanced diode bridge 50 formed by a plurality of corner diodes 55-58. In accordance with an example embodiment, MEMS device 30 is closely coupled to corner diodes 55-58. The term "closely coupled" should be understood to mean that MEMS device 30 is coupled to corner diodes 55-58 with as small of a loop area as possible so as to limit voltage created by stray inductance associated with the loop area to no more than about 1 V. In accordance with one aspect of the example embodiment, the term closely coupled should be interpreted to mean that MEMS device 30 is coupled to corner diodes 55-58 with a loop area in which voltage created by stray inductance is limited to less than about 1 V. The loop area is defined as the area between MEMS device 30 and balanced diode bridge 50. In accordance with one aspect of the example embodiment, an inductive voltage drop across MEMS device 30 during a switching event is controlled by maintaining a small loop inductance between MEMS die 33 and corner diodes 55-58. The inductive voltage across MEMS device 30 during switching is determined by three factors: the length of the loop area which establishes the level of stray inductance; MEMS switch current that is between about 1 A and about 10 A per parallel leg; and MEMS switching time which is about 1 µsec.

In still further accordance with the example embodiment, the desired loop area can be achieved by, for example, mounting MEMS device 30 on one side of a circuit board (not separately labeled) and corner diodes 55-58 on another side of the circuit board, directly opposite MEMS device 30. In accordance with another example, corner diodes 55-58 could be integrally formed within MEMS die 33. In any event, it should be understood that the particular arrangement of MEMS device 30 and corner diodes 55-58 can vary so long as the loop area, and, by extension, inductance, is maintained as small as possible. It should also be understood that the number of MEMS devices as well as the number of switches carried by a particular MEMS die could vary. While embodiments of the invention are described employing corner diodes 55-58, it will be appreciated that the term "corner" is not limited to a physical location of the diodes, but is rather directed to a placement of the diodes relative to the MEMS die 33.

As discussed above, corner diodes 55-58 are arranged in balanced diode bridge 50 so as to provide a low impedance path for load current passing through MEMS device 30. As such, corner diodes 55-58 are arranged so as to limit inductance which, in turn, limits voltage changes over time, i.e., voltage spikes across MEMS device 30. In the example embodiment shown, balanced diode bridge 50 includes a first branch 61 and a second branch 62. As used herein, the term "balanced diode bridge" describes a diode bridge that is configured such that voltage drops across both the first and second branches 61 and 62 are substantially equal when current in each branch 61, 62 is substantially equal. In first branch 61, diode 55 and diode 56 are coupled together to form a first series circuit (not separately labeled).

In a similar fashion, second branch 61 includes diode 57 and diode 58 operatively coupled together to form a second series circuit (also not separately labeled). Over current protection system 10 is also shown connected to a voltage snubber 70 that is connected in parallel relative to MEMS device 30 as well as power source 6 and electric motor 4. Voltage snubber 70 limits voltage overshoot during fast contact separation of each of MEMS switch 34. Voltage snubber 70 is shown in the form of a metal-oxide varistor (MOV) 74. MOV 74 is shown coupled to a snubber capacitor 76 that is connected in series with a snubber resistor 78. Snubber capacitor 76 and snubber resistor 78 are electrically connected in parallel to MOV 74.

In further accordance with the example embodiment, over current protection system is shown to include a single Hybrid Arcless Limiting Technology (HALT)/Pulse Activated Turn On (PATO) circuit 90. HALT/PATO circuit 90 includes a first branch 93 that is electrically connected to first branch 61 of balanced diode bridge 50 and a second branch 95 that is electrically connected to second branch 62 of balanced diode bridge 50. HALT/PATO circuit 90 includes a HALT circuit portion 104 and a PATO circuit portion 106 electrically connected between first and second branches 61 and 62 through common inductor 108.

HALT circuit portion 104 is connected in parallel to PATO circuit portion 106. HALT circuit portion 104 includes a HALT switch 112 shown in the form of a switching device 114. Switching device 114 is connected in series with a HALT capacitor 115. PATO circuit portion 106 includes a pulse switch 120 shown in the form of a switching device 122 connected in series with a pulse capacitor 123 and a pulse diode 124. Inductor 108 is connected in series to HALT and PATO circuit portions 104 and 106 in first branch 93. As will become more fully evident below, HALT switch 112 is selectively closed to open MEMS die 33, and pulse switch 120 is selectively closed to close MEMS die 33. That is, HALT switch 112 is closed to electrically power HALT circuit portion 104 to open MEMS device 30, and pulse switch 120 is closed to electrically power PATO circuit portion 106 to close MEMS device 30. The closing of MEMS device 30 completes electric circuit 13 allowing electrical current to flow from power source 6 to electric motor 4. Conversely, opening MEMS device 30 disrupts the flow of electrical current between power source 6 and electric motor 4.

In still further accordance with the example embodiment, controller 40 includes a short circuit detection portion 140 electrically coupled to a motor drive portion 142. Motor drive portion 142 selectively signals PATO circuit portion 106 and HALT circuit portion 104 to close and open MEMS device 30 in response to a motor start signal and a motor stop signal. In addition, motor drive portion 142 will signal HALT circuit portion 104 to open MEMS device 30 in the event of an over current condition signaled by short circuit detection portion 140. Short circuit detection portion 140 includes an operational amplifier (Op Amp) 145 electrically coupled to a rectifier 147, a comparator 149 and a micro-controller 151. Op Amp 145 generates a rate of change (di/dt) signal based in inputs from current sensing member 20. The rate of change signal is passed to rectifier 147. Rectifier 147 converts the rate of change signal into a unipolar rate of change signal that is passed to comparator 149. Comparator 149 compares the unipolar rate of change signal with a predetermined threshold value. If the unipolar rate of change signal is above the predetermined threshold value, an output signal is passed to motor drive portion 142 via micro-controller 151 to activate HALT circuit portion 104 and open MEMS device 30 cutting off the flow of electrical current in electric circuit 13 to protect electric motor 4 from over or short circuit current.

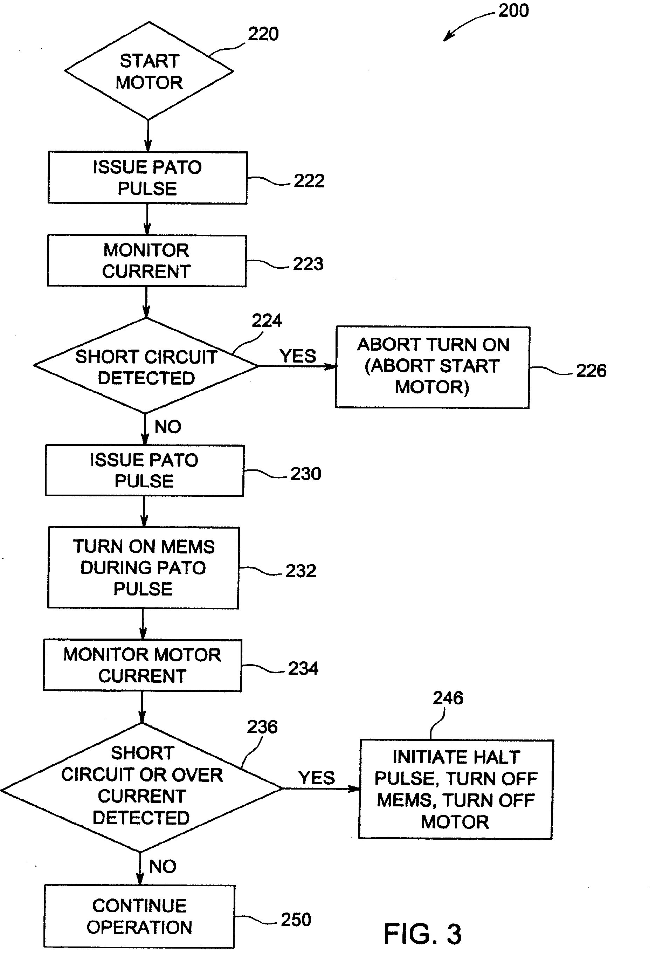

Reference will now be made to FIG. 3 in describing a method 200 of protecting electric motor 4 from an over or short circuit condition. Initially, controller 40 receives a motor start signal/request as indicated in block 220. Upon receipt of the start signal, motor drive portion 142 signals pulse switch 120 to close and send a PATO pulse through PATO circuit portion 106 to close MEMS device 30 as indicated in block 222. At this point, short circuit detection portion 140 begins to monitor the rate of change of the electrical current in block 223 and determine, in block 224, whether a short circuit condition exists. If the detected rate of change exceeds the predetermined threshold value, motor starting is aborted, the signal is cut off to pulse switch 120 and a signal is sent to HALT switch 112 to open MEMS device 30 as indicated in block 226. Of course it should be understood that the predetermined threshold value for motor starting may be different than the predetermined threshold value for a running condition to account for any differences associated with motor starting current.

If no short circuit is detected upon start up, a second PATO pulse is issued as indicated in block 230 and MEMS device 30 is turned on or closes to connect electric motor is connected to power source 6 as indicated in block 232. At this point, short circuit detection system 140 monitors for the rate of change of current as indicated in block 234 and determine, as indicated in block 236, whether a post start short circuit condition exists. If a short circuit is detected in block 236 a HALT pulse is dent through HALT circuit 104 to signal MEMS device 30 to open MEMS switch to cease motor operation as indicted in block 246, otherwise electric motor 4 continues normal operation as indicated in block 250

At this point, it should be understood that the example embodiments provide a system to monitor for over current conditions to protect an electrical load such as an electric motor. In contrast to prior art arrangements that monitor for changes in an amplitude of electric current, the example embodiments monitor an electrical current rate of change. In this manner, the example embodiments provide a faster response time that reduces the electric motor's risk of exposure to short circuit currents. In addition, the use of a MEMS device to cut off current flow provides a response time that is nearly an order of magnitude faster than existing systems. More specifically, the use of MEMS devices reduces circuit reaction time to no more than about 16 µsecs.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined in the appended claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An over current protection system (10) comprising:
a current sensing member (20) configured and disposed to output an electrical rate of change signal indicative of a rate of change of an electrical current being in excess of a predetermined value;
at least one micro electro-mechanical switch (MEMS) device (30) operatively connected to the current sensing member (20); and
a controller (40) electrically coupled to each of the current sensing member (20) and the at least one MEMS device (30), the controller (40) being configured and disposed to open the at least one MEMS device (30) in response to the electrical rate of change signal from the current sensing member (20).

2. The over current protection system (10) according to claim 1, further comprising: a diode bridge (50) closely coupled to the at least one MEMS device (30).

3. The over current protection system (10) according to claim 2, wherein the diode bridge (50) is coupled to the at least one MEMS device (30) through a loop area in which voltage created by stray inductance is limited to less than about 1 V.

4. The over current protection system (10) according to claim 2, wherein the diode bridge (50) is coupled to the at least one MEMS device (30) through a loop area in which voltage created by stray inductance is limited to less than about 1 V.

5. The over current protection system (10) according to claim 2, 3 or 4, further comprising: a Pulse Assist Turn-On (PATO) circuit (90) electrically coupled to the diode bridge (50).

6. The over current protection system (10) according to claim 2, 3, 4 or 5, further comprising: a Hybrid Arcless Limiting Technology (HALT) circuit (90) electrically coupled to the diode bridge (50).

7. The over-current protection system (10) according to any one of claims 1 to 6, wherein the controller (40) includes at least one micro-controller (151), and at least one of an operational amplifier (145), a rectifier (147), and a comparator (149), the micro-controller (151) being operatively coupled to the at least one operational amplifier (145), rectifier (147) and comparator (149).

8. A motor controller system comprising:
an electric motor (4) coupled to an electric circuit; and
an over current protection system (10) according to any one of claims 1 to 7, wherein:
the at least one micro electro-mechanical switch (MEMS) device (30) is arranged in the electric circuit and operatively connected to the current sensing member (20) and the electric motor (4); and
the controller (40) comprises a motor controller electrically coupled to each of the current sensing member (20) and the at least one MEMS device (30), the motor controller being configured and disposed to open the at least one MEMS device (30) in response to the electrical rate of change signal.

9. A method of protecting an electrical load from an over current condition, the method comprising:
issuing a Pulse Assist Turn On (PATO) pulse through a PATO circuit (90) to close a micro electro-mechanical switch (MEMS) device (30) electrically coupled to the load through an electric circuit;
sensing an electrical current passing through the electric circuit toward the electrical load;
monitoring for a rate of change of the electrical current in the electric circuit;
determining that the rate of change of the electrical current is in excess of a predetermined value; and
issuing a signal to open the MEMS device (30) upon detecting that the rate of change of the electrical current is in excess of the predetermined value.

10. The method of claim 9, further comprising:
passing the electrical current to the electrical load if the rate of change of the electrical current is below the predetermined value; and
monitoring the electrical current.

11. The method of claim 9 or claim 10, further comprising: issuing a Hybrid Arcless Limiting Technology (HALT) signal to open the MEMS device (30) if the rate of change of the electrical current exceeds the predetermined value.

12. The method of claim 9, 10 or 11, wherein the MEMS device (30) is configured to open after no more than 16 µsec of detecting the rate of change of the electrical current in excess of the predetermined value.

## Patentansprüche

1. Überstromschutzsystem (10), umfassend:
ein Strommesselement (20), das zum Ausgeben eines elektrischen Ratenänderungssignals ausgelegt und angeordnet ist, welche auf eine Änderungsrate eines elektrischen Stroms hinweist, die größer als ein vorgegebener Wert ist;
mindestens eine mikroelektromechanische Schalter-(MEMS)-Vorrichtung (30), die betriebsmäßig mit dem Strommesselement (20) verbunden ist; und
einen Controller (40), der elektrisch mit sowohl mit dem Strommesselement (20) wie auch mit der mindestens einen MEMS-Vorrichtung (30) verbunden ist, wobei der Controller (40) zum Öffnen der mindestens einen MEMS-Vorrichtung (30) als Reaktion auf das elektrische Ratenänderungssignal vom Strommesselement (20) ausgelegt und angeordnet ist.

2. Überstromschutzsystem (10) nach Anspruch 1, das ferner umfasst: eine Diodenbrücke (50), die eng mit der mindestens einen MEMS-Vorrichtung (30) verbunden ist.

3. Überstromschutzsystem (10) nach Anspruch 2, wobei die Diodenbrücke (50) mit der mindestens einen MEMS-Vorrichtung (30) durch einen Schleifenbereich verbunden ist, in dem Spannung, die durch Streuinduktanz erzeugt wird, auf weniger als etwa 1 V begrenzt ist.

4. Überstromschutzsystem (10) nach Anspruch 2, wobei die Diodenbrücke (50) mit der mindestens einen MEMS-Vorrichtung (30) durch einen Schleifenbereich verbunden ist, in dem Spannung, die durch Streuinduktanz erzeugt wird, auf weniger als etwa 1 V begrenzt ist.

5. Überstromschutzsystem (10) nach Anspruch 2, 3 oder 4, das ferner umfasst: eine Pulse Assist Turn-On (PATO)-(impulsgestützte Einschalt)-Schaltung (90), die elektrisch mit der Diodenbrücke (50) verbunden ist.

6. Überstromschutzsystem (10) nach Anspruch 2, 3, 4 oder 5, das ferner umfasst: eine Hybrid Arcless Limiting Technology (HALT)-(bogenlose hybride Begrenzungstechnologie)-Schaltung (90), die elektrisch mit der Diodenbrücke (50) verbunden ist.

7. Überstromschutzsystem (10) nach einem der Ansprüche 1 bis 6, wobei der Controller (40) mindestens einen Mikrocontroller (151) und mindestens ein Element aus einem Operationsverstärker (145), einem Gleichrichter (147) und einem Komparator (149) umfasst, wobei der Mikrocontroller (151) betriebsmäßig mit dem mindestens einen Operationsverstärker (145), Gleichrichter (147) und Komparator (149) verbunden ist.

8. Motorcontrollersystem, umfassend:
einen Elektromotor (4), der mit einer elektrischen Schaltung verbunden ist; und
ein Überstromschutzsystem (10) nach einem der Ansprüche 1 bis 7, wobei:
die mindestens eine mikroelektromechanische Schalter (MEMS)-Vorrichtung (30) in der elektrischen Schaltung angeordnet und betriebsmäßig mit dem Strommesselement (20) und dem Elektromotor (4) verbunden ist; und
der Controller (40) einen Motorcontroller umfasst, der elektrisch mit sowohl mit dem Strommesselement (20) wie auch mit der mindestens einen MEMS-Vorrichtung (30) verbunden ist, wobei der Motorcontroller zum Öffnen der mindestens einen MEMS-Vorrichtung (30) als Reaktion auf das elektrische Ratenänderungssignal ausgelegt und angeordnet ist.

9. Verfahren zum Schützen einer elektrischen Last vor einem Überstromzustand, wobei das Verfahren Folgendes umfasst:
Ausgeben eines Pulse Assist Turn On (PATO)-Impulses durch eine PATO-Schaltung (90) zum Schließen einer mikroelektromechanischen Schalter (MEMS)-Vorrichtung (30), die elektrisch mit der Last durch eine elektrische Schaltung verbunden ist;
Erfassen eines elektrischen Stroms, der durch die elektrische Schaltung zur elektrischen Last fließt;
Überwachen des elektrischen Stroms in der elektrischen Schaltung auf eine Ratenänderung;
Bestimmen, dass die Ratenänderung des elektrischen Stroms größer als ein vorgegebener Wert ist; und
Ausgeben eines Signals zum Öffnen der MEMS-Vorrichtung (30) beim Feststellen, dass die Ratenänderung des elektrischen Stroms größer als der vorgegebene Wert ist.

10. Verfahren nach Anspruch 9, ferner umfassend:
Durchlassen des elektrischen Stroms zur elektrischen Last, wenn die Ratenänderung des elektrischen Stroms unterhalb des vorgegebenen Wertes liegt; und Überwachen des elektrischen Stroms.

11. Verfahren nach Anspruch 9 oder 10, das ferner umfasst:
Ausgeben eines Hybrid Arcless Limiting Technology (HALT)-Signals zum Öffnen der MEMS-Vorrichtung (30), wenn die Ratenänderung des elektrischen Stroms den vorgegebenen Wert übersteigt.

12. Verfahren nach Anspruch 9, 10 oder 11, wobei die MEMS-Vorrichtung (30) zum Öffnen nach höchstens 16 µs nach dem Feststellen ausgelegt ist, dass die Änderungsrate des elektrischen Stroms größer als der vorgegebene Wert ist.

## Revendications

1. Système de protection contre les surintensités (10) comprenant :
un élément de détection de courant (20) configuré et disposé pour sortir un signal électrique de rythme de variation indicatif d'un rythme de variation d'un courant électrique en excès d'une valeur prédéterminée ;
au moins un dispositif microcommutateur électromécanique (MEMS) (30) relié de manière opérationnelle à l'élément de détection de courant (20) ; et
une unité de commande (40) électriquement reliée à chacun de l'élément de détection de courant (20) et de l'au moins un dispositif MEMS (30), l'unité de commande (40) étant configurée et disposée pour ouvrir l'au moins un dispositif MEMS (30) en réponse au signal électrique de rythme de variation en provenance de l'élément de détection de courant (20).

2. Système de protection contre les surintensités (10) selon la revendication 1, comprenant en outre : un pont de diodes (50) étroitement relié à l'au moins un dispositif MEMS (30).

3. Système de protection contre les surintensités (10) selon la revendication 2, dans lequel le pont de diodes (50) est relié à l'au moins un dispositif MEMS (30) par l'intermédiaire d'une zone de boucle dans laquelle une tension créée par inductance parasite est limitée à moins d'environ 1 V.

4. Système de protection contre les surintensités (10) selon la revendication 2, dans lequel le pont de diodes (50) est relié à l'au moins un dispositif MEMS (30) par l'intermédiaire d'une zone de boucle dans laquelle une tension créée par inductance parasite est limitée à moins d'environ 1 V.

5. Système de protection contre les surintensités (10) selon la revendication 2, 3 ou 4, comprenant en outre : un circuit d'Allumage Assisté par Impulsion (PATO) (90) électriquement relié au pont de diodes (50).

6. Système de protection contre les surintensités (10) selon la revendication 2, 3, 4 ou 5, comprenant en outre : un circuit à Technologie Hybride de Limitation sans Arc (HALT) (90) électriquement relié au pont de diodes (50).

7. Système de protection contre les surintensités (10) selon l'une quelconque des revendications 1 à 6, dans lequel l'unité de commande (40) inclut au moins une micro-unité de commande (151), et au moins l'un d'un amplificateur opérationnel (145), d'un redresseur (147), et d'un comparateur (149), la micro-unité de commande (151) étant reliée de manière opérationnelle à l'au moins un amplificateur opérationnel (145), redresseur (147) et comparateur (149).

8. Système d'unité de commande de moteur comprenant :
un moteur électrique (4) relié à un circuit électrique ; et
un système de protection contre les surintensités (10) selon l'une quelconque des revendications 1 à 7, dans lequel :
l'au moins un dispositif microcommutateur électromécanique (MEMS) (30) est agencé dans le circuit électrique et est relié de manière opérationnelle à l'élément de détection de courant (20) et au moteur électrique (4) ; et
l'unité de commande (40) comprend une unité de commande de moteur électriquement reliée à chacun de l'élément de détection de courant (20) et de l'au moins un dispositif MEMS (30), l'unité de commande de moteur étant configurée et disposée pour ouvrir l'au moins un dispositif MEMS (30) en réponse au signal électrique de rythme de variation.

9. Une méthode de protection d'une charge électrique contre un état de surintensité, la méthode comprenant :
la délivrance d'une impulsion d'Allumage Assisté par Impulsion (PATO) par l'intermédiaire d'un circuit PATO (90) pour fermer un dispositif microcommutateur électromécanique (MEMS) (30) électriquement relié à la charge par un circuit électrique ;
la détection d'un courant électrique passant à travers le circuit électrique vers la charge électrique ;
le contrôle d'un rythme de variation du courant électrique dans le circuit électrique ;
la détermination que le rythme de variation du courant électrique est en excès d'une valeur prédéterminée ; et
la délivrance d'un signal pour ouvrir le dispositif MEMS (30) lors de la détection que le rythme de variation du courant électrique est en excès de la valeur prédéterminée.

10. La méthode selon la revendication 9, comprenant en outre :
le passage du courant électrique à la charge électrique si le rythme de variation du courant électrique est au-dessous de la valeur prédéterminée ; et
le contrôle du courant électrique.

11. La méthode selon la revendication 9 ou la revendication 10, comprenant en outre : la délivrance d'un signal de Technologie Hybride de Limitation sans Arc (HALT) pour ouvrir le dispositif MEMS (30) si le rythme de variation du courant électrique dépasse la valeur prédéterminée.

12. La méthode selon la revendication 9, 10 ou 11, dans laquelle le dispositif MEMS (30) est configuré pour s'ouvrir après pas plus de 16 µs de détection du rythme de variation du courant électrique en excès de la valeur prédéterminée.
